# EUROPEAN PATENT APPLICATION

(11) **EP 4 481 658 A1**
(43) Date of publication of application: **25.12.2024**
(21) Application number: 24176232.7
(22) Date of filing: 16.05.2024
(51) Int. Cl.: G06Q 20/38, H04L 9/00

(54) **INFORMATION PROCESSING DEVICE, SYSTEM, AND INFORMATION PROCESSING PROGRAM**

(30) Priority: 20.06.2023 JP 2023100850
(71) Applicant: FUJITSU LIMITED, Kawasaki-shi, Kanagawa 211-8588 (JP)
(72) Inventor: HASEGAWA, Yuki, Kawasaki-shi, Kanagawa, 211-8588 (JP); MORINAGA, Masanobu, Kawasaki-shi, Kanagawa, 211-8588 (JP)
(74) Representative: Hoffmann Eitle

(57) **Abstract**

An information processing device includes a control unit configured to: obtain a request that includes a first address on a first blockchain and a second address on a second blockchain and requests association of the first address with the second address; detect, based on the first address included in the obtained request, a first transaction that includes the first address and a third address on a third blockchain managed by the information processing device and is issued by the first blockchain in response to a request from a user who has the first address; detect, based on the second address included in the obtained request, a second transaction that includes the second address and a fourth address on the third blockchain and is issued by the second blockchain in response to a request from the user who has the second address; and determine to associate the first address with the second address when the third address and the fourth address match, and determine not to associate the first address with the second address when the third address and the fourth address do not match based on the detected first transaction and the detected second transaction.

## Description

### FIELD

The embodiment discussed herein is related to an information processing device, a system, and an information processing program.

### BACKGROUND

There is traditionally a token called a non-fungible token (NFT) issued and managed on a blockchain. An address on the blockchain corresponding to an owner of the NFT is a payee of a royalty. Here, the NFT may be transferred from a blockchain of a transfer source to a blockchain of a transfer destination. At this time, it is desirable that a linkage unit that links between the blockchains specifies a correspondence relationship between an address on the blockchain of the transfer source and an address on the blockchain of the transfer destination each corresponding the owner of the NFT, and sets the payee of the royalty.

As related art, for example, there is a technique of giving crypto-assets of a given consideration amount to a user from a predetermined account of the crypto-assets in exchange for an object owned by the user. Furthermore, for example, there is a technique of issuing a second NFT to a second wallet of a second user in a second blockchain on condition that a first NFT stored in a first wallet of a first user is disabled in a first blockchain. Furthermore, for example, there is a technique of transferring an ownership right of a digital asset in response to a transfer request.

Japanese Laid-open Patent Publication No. 2021-189475, Japanese Laid-open Patent Publication No. 2023-066919, and U.S. Patent Application Publication No. 2022/0215361 are disclosed as related art.

### SUMMARY

### TECHNICAL PROBLEM

However, according to the existing techniques, it is difficult to ensure validity of a correspondence relationship between two addresses on blockchains different from each other. For example, it is conceivable that the linkage unit is attacked to associate an address on the blockchain of the transfer source corresponding to the owner of the NFT with an address on the blockchain of the transfer destination corresponding to an attacker.

In one aspect, an object of the embodiment is to ensure validity of a correspondence relationship between two addresses on blockchains different from each other.

According to an aspect of the embodiments, an information processing device includes a control unit configured to: obtain a request that includes a first address on a first blockchain and a second address on a second blockchain and requests association of the first address with the second address; detect, based on the first address included in the obtained request, a first transaction that includes the first address and a third address on a third blockchain managed by the information processing device and is issued by the first blockchain in response to a request from a user who has the first address; detect, based on the second address included in the obtained request, a second transaction that includes the second address and a fourth address on the third blockchain and is issued by the second blockchain in response to a request from the user who has the second address; and determine to associate the first address with the second address when the third address and the fourth address match, and determine not to associate the first address with the second address when the third address and the fourth address do not match based on the detected first transaction and the detected second transaction.

### ADVANTAGEOUS EFFECTS OF INVENTION

According to one mode, it becomes possible to ensure validity of a correspondence relationship between two addresses on blockchains different from each other.

### BRIEF DESCRIPTION OF DRAWINGS

FIG. 1 is an explanatory diagram illustrating an example of an information processing method according to an embodiment;
FIG. 2 is an explanatory diagram illustrating an example of an information processing system 200;
FIG. 3 is a block diagram illustrating an exemplary hardware configuration of an information processing device 100;
FIG. 4 is a block diagram illustrating an exemplary functional configuration of the information processing system 200;
FIG. 5 is an explanatory diagram (part 1) illustrating exemplary operation of the information processing system 200;
FIG. 6 is an explanatory diagram (part 2) illustrating exemplary operation of the information processing system 200;
FIG. 7 is an explanatory diagram (part 1) illustrating a specific example of the operation of the information processing system 200;
FIG. 8 is an explanatory diagram (part 2) illustrating a specific example of the operation of the information processing system 200;
FIG. 9 is an explanatory diagram (part 3) illustrating a specific example of the operation of the information processing system 200;
FIG. 10 is an explanatory diagram (part 4) illustrating a specific example of the operation of the information processing system 200;
FIG. 11 is an explanatory diagram (part 5) illustrating a specific example of the operation of the information processing system 200;
FIG. 12 is a flowchart illustrating an example of an association processing procedure; and
FIG. 13 is a flowchart illustrating an example of a transfer processing procedure.

### DESCRIPTION OF EMBODIMENTS

Hereinafter, an embodiment of an information processing device, a system, and an information processing program will be described in detail with reference to the drawings.

### (Example of Information Processing Method According to Embodiment)

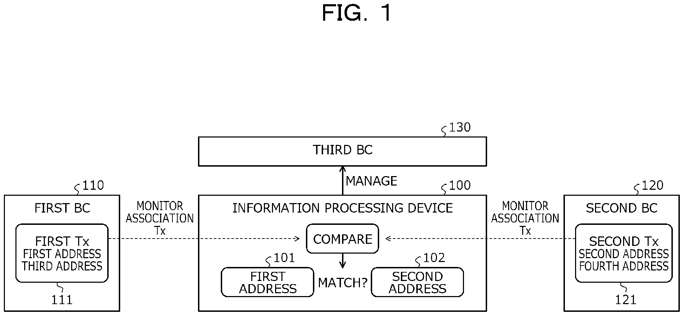

FIG. 1 is an explanatory diagram illustrating an example of an information processing method according to an embodiment. An information processing device 100 is a computer for managing a correspondence relationship between two addresses on blockchains different from each other. Examples of the information processing device 100 include a server, a personal computer (PC), and the like. In the following descriptions, a blockchain may be referred to as a "BC".

There is traditionally an NFT issued and managed on a BC. The NFT associates data with royalty information, for example. The royalty information includes, for example, an address on the BC to which a royalty of the data is paid. The royalty information may include, for example, a method of calculating the royalty of the data. The address on the BC is specified by, for example, an owner of the NFT. For example, the NFT is utilized in fields such as art, sports, and metaverse. Examples of the owner of the NFT include an art creator, and the like.

Here, it may be desired to transfer the NFT from a BC of a transfer source to a BC of a transfer destination. For example, a creator may intend to transfer an NFT, which has been experimentally issued in a private BC in association with art in consideration of a financial risk, to a public BC in consideration of ease of use of the art.

Meanwhile, at a time of transferring an NFT between BCs, there is a first method in which the NFT is deleted in the BC of the transfer source and the NFT is generated in the BC of the transfer destination. The deletion is also referred to as burn (burning), for example. The generation is also referred to as mint, for example.

However, the first method has a problem that the royalty information corresponding to the NFT on the BC of the transfer source may not be transferred to the NFT on the BC of the transfer destination. Therefore, the creator may fail to receive the royalty for the NFT even when the art corresponding the NFT on the BC of the transfer destination is used.

In view of the above, a second method is conceivable in which a linkage unit that links between BCs rewrites the royalty information corresponding to the NFT on the BC of the transfer source with reference to the correspondence relationship between the address on the BC of the transfer source and the address on the BC of the transfer destination registered in advance, and transfers it to the NFT on the BC of the transfer destination. The linkage unit manages, for example, a linkage BC that records a processing history, a correspondence relationship, and the like. The linkage unit registers, in the linkage BC, the correspondence relationship between the address on the BC of the transfer source and the address on the BC of the transfer destination, for example. The linkage BC is preferably a public BC from the viewpoint of permanency, neutrality, or the like.

The second method has a problem that it is difficult to ensure the validity of the correspondence relationship between the address on the BC of the transfer source and the address on the BC of the transfer destination registered in the linkage BC. For example, it is conceivable that the linkage unit is attacked to register, in the linkage BC, a correspondence relationship between the address on the BC of the transfer source corresponding to the owner of the NFT and an address on a BC of a transfer destination corresponding to an attacker. Accordingly, the attacker may fraudulently receive the royalty for the NFT on the BC of the transfer destination.

Therefore, it is desirable to ensure the validity of the correspondence relationship between two addresses on BCs different from each other. For example, it is desirable to ensure that the two addresses on the different BCs to be associated with each other are both addresses specified by the owner of the NFT and corresponding to the owner of the NFT.

Here, for example, a third method is conceivable in which a smart contract of the linkage BC receives two addresses on BCs different from each other, signatures based on private keys corresponding to the respective addresses, and public keys corresponding to the respective addresses. In the following descriptions, the smart contract may be referred to as an "SC".

According to the third method, the SC determines that the correspondence relationship between the respective addresses is valid only when both signatures based on the private keys corresponding to the respective addresses are determined to be valid based on the public keys corresponding to the respective addresses. When the correspondence relationship between the respective addresses is valid, the SC registers the correspondence relationship between the respective addresses in the linkage BC.

The third method has a problem that the SC may not be enabled to determine whether or not the correspondence relationship between the respective addresses is valid when there is no pair of the private key and the public key corresponding to the address on the BC. For example, when the BC is in a form of identifying a user by cooperation with a social networking service (SNS), there is no pair of the private key and the public key corresponding to the address on the BC.

Furthermore, for example, a fourth method is conceivable in which the linkage unit receives two addresses on BCs different from each other and authentication keys corresponding to the respective addresses. According to the fourth method, the linkage unit registers the correspondence relationship between the respective addresses in the linkage BC only when the correspondence relationship between the respective addresses is determined to be valid based on the authentication keys corresponding to the respective addresses.

The fourth method has a problem that the neutrality of the linkage unit is relatively low. It is difficult for a third party to verify the validity of the process of determining, in the linkage unit, whether or not the correspondence relationship between the respective addresses is valid afterward. Thus, it is difficult to ensure the validity of the registered correspondence relationship between the two addresses on the BCs different from each other.

In view of the above, in the present embodiment, an information processing method capable of ensuring validity of a correspondence relationship between two addresses on blockchains different from each other will be described.

In FIG. 1, there are a first BC 110, a second BC 120, and a third BC 130. The information processing device 100 may access the first BC 110. The information processing device 100 may access the second BC 120. The information processing device 100 manages the third BC 130. The third BC 130 is preferably a public BC.

The first BC 110 has one or more addresses. The first BC 110 has, for example, a first address 101. The first BC 110 has a function of issuing and recording a transaction. The second BC 120 has one or more addresses. The second BC 120 has, for example, a second address 102. The second BC 120 has a function of issuing and recording a transaction. The second BC 120 is, for example, a BC different from the first BC 110. The third BC 130 has one or more addresses. In the following descriptions, a transaction may be referred to as a "Tx".
(1-1) A user having the first address 101 requests, using a specific computer, the first BC 110 to issue a first Tx 111 including the first address 101 and a third address on the third BC 130. In response to the request from the user having the first address 101, the first BC 110 issues the first Tx 111 including the first address 101 and the third address on the third BC 130.
(1-2) The user having the second address 102 requests, using the specific computer, the second BC 120 to issue a second Tx 121 including the second address 102 and a fourth address on the third BC 130. In response to the request from the user having the second address 102, the second BC 120 issues the second Tx 121 including the second address 102 and the fourth address on the third BC 130.
(1-3) The user who intends to associate the first address 101 with the second address 102 transmits, using the specific computer, a request for requesting association of the first address 101 and the second address 102 to the information processing device 100. The request includes, for example, the first address 101 on the first BC 110 and the second address 102 on the second BC 120. The information processing device 100 receives and obtains the request. The information processing device 100 identifies the first address 101 and the second address 102 based on the obtained request. As a result, the information processing device 100 is enabled to identify the combination of addresses to be associated.
(1-4) The information processing device 100 detects the first Tx 111 issued by the first BC 110 based on the first address 101 included in the obtained request. The information processing device 100 identifies the third address based on the detected first Tx 111. As a result, the information processing device 100 is enabled to obtain a guideline for determining whether or not to associate the first address 101 with the second address 102. Furthermore, the information processing device 100 is enabled to ensure the validity of association of the first address 101 based on the fact that the first BC 110 has a property of not issuing the first Tx 111 in response to a request from a user other than the user having the first address 101.
(1-5) The information processing device 100 detects the second Tx 121 issued by the second BC 120 based on the second address 102 included in the obtained request. The information processing device 100 identifies the fourth address based on the detected second Tx 121. As a result, the information processing device 100 is enabled to obtain a guideline for determining whether or not to associate the first address 101 with the second address 102. Furthermore, the information processing device 100 is enabled to ensure the validity of association of the second address 102 based on the fact that the second BC 120 has a property of not issuing the second Tx 121 in response to a request from a user other than the user having the second address 102.
(1-6) The information processing device 100 determines whether or not the third address and the fourth address match based on the detected first Tx 111 and the detected second Tx 121. When the third address and the fourth address match, the information processing device 100 determines to associate the first address 101 with the second address 102. On the other hand, when the third address and the fourth address do not match, the information processing device 100 determines not to associate the first address 101 with the second address 102. As a result, the information processing device 100 is enabled to appropriately determine whether or not to associate the first address 101 with the second address 102.

For example, since the third address and the fourth address match, the information processing device 100 is enabled to ensure that the user having the first address 101 and the user having the second address 102 are the same. For example, since both the third address and the fourth address are addresses included in the third BC 130, the information processing device 100 is enabled to guarantee the validity of the user having the first address 101 and the second address 102. In this manner, the information processing device 100 is enabled to ensure the validity of the correspondence relationship between the two addresses on the BCs different from each other. For example, the information processing device 100 is enabled to ensure the validity of the correspondence relationship between the first address 101 and the second address 102.

Even in a case where the first BC 110 and the second BC 120 are BCs in which a pair of a private key and a public key corresponding to an address does not exist, the information processing device 100 is enabled to determine whether or not to associate the first address 101 with the second address 102. The information processing device 100 is enabled to ensure the validity of the correspondence relationship between the first address 101 and the second address 102.

At the time of determining whether or not to associate the first address 101 with the second address 102, the information processing device 100 is enabled to utilize the first Tx 111 issued by the first BC 110 and the second Tx 121 issued by the second BC 120. Thus, the information processing device 100 is enabled to improve the neutrality at the time of determining whether or not to associate the first address 101 with the second address 102.

The information processing device 100 may register, in the third BC 130, the correspondence relationship between the first address 101 and the second address 102 when it is determined that the first address 101 is to be associated with the second address 102. With this arrangement, the information processing device 100 is enabled to make it possible to verify the correspondence relationship between the first address 101 and the second address 102 thereafter. The information processing device 100 is enabled to leave a trail of the association of the first address 101 and the second address 102 in the first BC 110, the second BC 120, and the third BC 130.

Furthermore, the information processing device 100 may refer to the correspondence relationship between the first address 101 and the second address 102 when a request for requesting a transfer of the NFT on the first BC 110 with the first BC 110 as a transfer source and the second BC 120 as a transfer destination is received. Therefore, at the time of transferring the NFT on the first BC 110, the information processing device 100 is enabled to rewrite the royalty information corresponding to the NFT and appropriately transfer it to the second BC 120.

While a case where the information processing device 100 determines whether or not to associate the two addresses on the BCs different from each other and ensures the validity of the correspondence relationship between the two addresses on the BCs different from each other has been described here, it is not limited to this. For example, there may be a case where the information processing device 100 determines whether or not to associate three or more addresses on BCs different from each other and ensures validity of a correspondence relationship between the three or more addresses on the BCs different from each other.

While a case where the second BC 120 is a BC different from the first BC 110 has been described here, it is not limited to this. For example, the second BC 120 may be the same BC as the first BC 110. While a case where the function as the information processing device 100 is implemented by a single computer has been described here, it is not limited to this. For example, there may be a case where the function as the information processing device 100 is implemented by a plurality of computers.

### (Example of Information Processing System 200)

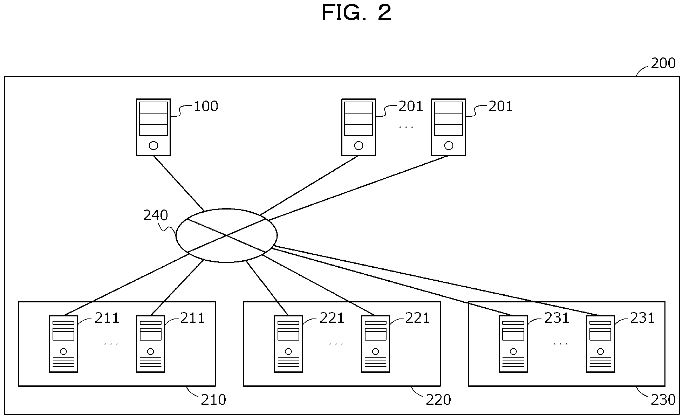

Next, an example of an information processing system 200 to which the information processing device 100 illustrated in FIG. 1 is applied will be described with reference to FIG. 2.

FIG. 2 is an explanatory diagram illustrating an example of the information processing system 200. In FIG. 2, the information processing system 200 includes the information processing device 100, a first BC 210, a second BC 220, a third BC 230, and one or more client devices 201. The first BC 210 includes a plurality of first BC nodes 211. The second BC 220 includes a plurality of second BC nodes 221. The third BC 230 includes a plurality of third BC nodes 231.

In the information processing system 200, the information processing device 100 and the first BC nodes 211 are coupled via a wired or wireless network 240. Examples of the network 240 include a local area network (LAN), a wide area network (WAN), the Internet, and the like.

Furthermore, in the information processing system 200, the information processing device 100 and the second BC nodes 221 are coupled via the wired or wireless network 240. Furthermore, in the information processing system 200, the information processing device 100 and the third BC nodes 231 are coupled via the wired or wireless network 240.

Furthermore, in the information processing system 200, the client device 201 and the first BC nodes 211 are coupled via the wired or wireless network 240. Furthermore, in the information processing system 200, the client device 201 and the second BC nodes 221 are coupled via the wired or wireless network 240. Furthermore, in the information processing system 200, the information processing device 100 and the client device 201 are coupled via the wired or wireless network 240.

The client device 201 is a computer used by an operator who attempts to associate two addresses on BCs different from each other. For example, it is assumed that the operator desires to associate the first address on the first BC 210 with the second address on the second BC 220.

The client device 201 transmits an issuance request for requesting issuance of a Tx to the first BC node 211 based on an operation input made by the operator. For example, the client device 201 transmits, to the first BC node 211, an issuance request for requesting issuance of a first Tx including the first address on the first BC 210 and the third address on the third BC 230 based on the operation input made by the operator. The first address is an address owned by the operator. The third address is an address owned by the operator.

The client device 201 transmits an issuance request for requesting issuance of a Tx to the second BC node 221 based on an operation input made by the operator. For example, the client device 201 transmits, to the second BC node 221, an issuance request for requesting issuance of a second Tx including the second address on the second BC 220 and the fourth address on the third BC 230 based on the operation input made by the operator. The second address is an address owned by the operator. The fourth address is an address owned by the operator.

The client device 201 transmits, to the information processing device 100, an association request for requesting association of two addresses on BCs different from each other based on an operation input made by the operator. For example, the client device 201 transmits, to the information processing device 100, an association request for requesting association of the first address on the first BC 210 and the second address on the second BC 220 based on the operation input made by the operator. Examples of the client device 201 include a PC, a tablet terminal, a smartphone, and the like.

The first BC node 211 is a computer that forms the first BC 210. Each of the plurality of first BC nodes 211 stores a common first distributed ledger, thereby managing the first distributed ledger. The first BC node 211 receives the issuance request from the client device 201. For example, the first BC node 211 issues the first Tx including the first address on the first BC 210 and the third address on the third BC 230 in response to the issuance request.

The first Tx includes, for example, a field representing an issuer and a field representing a message. Specifically, the first BC node 211 identifies the first address on the first BC 210 corresponding to the operator. Specifically, the first BC node 211 issues the first Tx in which the identified first address on the first BC 210 is set in the field representing the issuer and the third address on the third BC 230 is set in the field of the message. The first BC node 211 registers the issued first Tx in the first distributed ledger. Examples of the first BC node 211 include a server, a PC, and the like.

The second BC node 221 is a computer that forms the second BC 220. Each of the plurality of second BC nodes 221 stores a common second distributed ledger, thereby managing the second distributed ledger. The second BC node 221 receives the issuance request from the client device 201. For example, the second BC node 221 issues the second Tx including the second address on the second BC 220 and the fourth address on the third BC 230 in response to the issuance request.

The second Tx includes, for example, a field representing an issuer and a field representing a message. Specifically, the second BC node 221 identifies the second address on the second BC 220 corresponding to the operator. Specifically, the second BC node 221 issues the second Tx in which the identified second address on the second BC 220 is set in the field representing the issuer and the fourth address on the third BC 230 is set in the field of the message. The second BC node 221 registers the issued second Tx in the second distributed ledger. Examples of the second BC node 221 include a server, a PC, and the like.

The information processing device 100 is a computer for managing a correspondence relationship between two addresses on BCs different from each other. The information processing device 100 receives the association request from the client device 201. The information processing device 100 identifies the first address and the second address based on the received association request.

The information processing device 100 detects the first Tx including the first address in the first BC 210 in response to the acquisition of the association request. When the first Tx is detected, the information processing device 100 obtains the third address on the third BC 230 included in the first Tx. The information processing device 100 detects the second Tx including the second address in the second BC 220 in response to the acquisition of the association request. When the second Tx is detected, the information processing device 100 obtains the fourth address on the third BC 230 included in the second Tx.

When the third address and the fourth address match, the information processing device 100 determines to associate the first address with the second address, and controls the third BC 230 to register the correspondence relationship between the first address and the second address. On the other hand, when the third address and the fourth address do not match, the information processing device 100 determines not to associate the first address with the second address. Examples of the information processing device 100 include a server, a PC, and the like.

The third BC node 231 is a computer that forms the third BC 230. Each of the plurality of third BC nodes 231 stores a common third distributed ledger, thereby managing the third distributed ledger. The third BC node 231 registers a correspondence relationship between two addresses on BCs different from each other in the third distributed ledger under the control of the information processing device 100. For example, the third BC node 231 registers, in the third distributed ledger, the correspondence relationship between the first address on the first BC 210 and the second address on the second BC 220. Examples of the third BC node 231 include a server, a PC, and the like.

### (Exemplary Application of Information Processing System 200)

Next, exemplary application of the information processing system 200 will be described. The information processing system 200 illustrated in FIG. 2 may be applied to a case where, for example, an NFT on the first BC 210 to which royalty information is assigned is transferred onto the second BC 220. The royalty information includes an address to which the royalty of the NFT is paid. The royalty information includes, for example, the first address. For example, the client device 201 transmits, to the information processing device 100, a transfer request for requesting transfer of the NFT on the first BC 210 onto the second BC 220 based on an operation input made by the operator. The transfer request indicates the NFT to be transferred, the first BC 210 of the transfer source, and the second BC 220 of the transfer destination.

For example, the information processing device 100 receives the transfer request from the client device 201. The information processing device 100 identifies the NFT to be transferred, the first BC 210 of the transfer source, and the second BC 220 of the transfer destination based on the transfer request. For example, the information processing device 100 obtains the first address included in the royalty information assigned to the identified NFT to be transferred with reference to the identified first BC 210 of the transfer source. For example, the information processing device 100 identifies the second address corresponding to the obtained first address with reference to the third BC 230. For example, the information processing device 100 controls the first BC 210 to delete the NFT to be transferred on the first BC 210 of the transfer source, and controls the second BC 220 to generate the NFT to be transferred on the second BC 220 of the transfer destination. For example, the information processing device 100 controls the second BC 220 to assign the royalty information including the identified second address to the generated NFT to be transferred on the second BC 220 of the transfer destination.

While the case where the NFT on the first BC 210 to which the royalty information is assigned is transferred onto the second BC 220 has been described here, it is not limited to this. For example, a case is conceivable in which the first BC 210 is a BC that manages an environmental contribution point according to action of the user in association with the address of the user, and the second BC 220 is a BC that manages an exchange point of the user exchangeable for a product in association with the address of the user. In this case, the information processing system 200 may be applied to a case where the environmental contribution point on the first BC 210 is converted into an exchange point on the second BC 220 and transferred.

### (Exemplary Hardware Configuration of Information Processing Device 100)

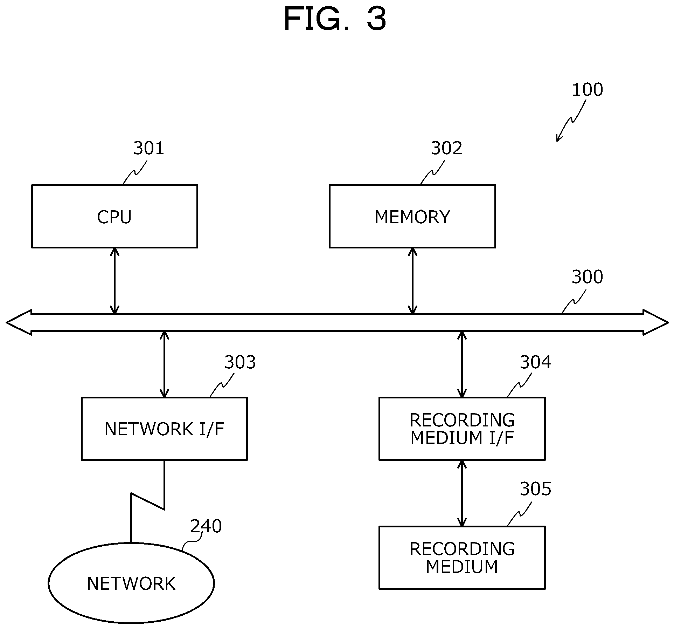

Next, an exemplary hardware configuration of the information processing device 100 will be described with reference to FIG. 3.

FIG. 3 is a block diagram illustrating the exemplary hardware configuration of the information processing device 100. In FIG. 3, the information processing device 100 includes a central processing unit (CPU) 301, a memory 302, a network interface (I/F) 303, a recording medium I/F 304, and a recording medium 305. Furthermore, the individual components are coupled to each other by a bus 300.

Here, the CPU 301 performs overall control of the information processing device 100. The memory 302 includes, for example, a read only memory (ROM), a random access memory (RAM), a flash ROM, and the like. Specifically, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is coupled to the network 240 through a communication line, and is coupled to another computer via the network 240. Then, the network I/F 303 takes control of an interface between the network 240 and the inside, and controls input and output of data from and to the another computer. Examples of the network I/F 303 include a modem, a LAN adapter, and the like.

The recording medium I/F 304 controls read and write of data from and to the recording medium 305 under the control of the CPU 301. Examples of the recording medium I/F 304 include a disk drive, a solid state drive (SSD), a universal serial bus (USB) port, and the like. The recording medium 305 is a nonvolatile memory that stores data written under the control of the recording medium I/F 304. Examples of the recording medium 305 include a disk, a semiconductor memory, a USB memory, and the like. The recording medium 305 may be attachable to and detachable from the information processing device 100.

The information processing device 100 may include, for example, a keyboard, a mouse, a display, a printer, a scanner, a microphone, a speaker, and the like in addition to the components described above. Furthermore, the information processing device 100 may include a plurality of the recording medium I/Fs 304 and a plurality of the recording media 305. Furthermore, the information processing device 100 may not include the recording medium I/F 304 or the recording medium 305.

### (Exemplary Hardware Configuration of Client Device 201)

Since an exemplary hardware configuration of the client device 201 is specifically similar to the exemplary hardware configuration of the information processing device 100 illustrated in FIG. 3, description thereof will be omitted.

### (Exemplary Hardware Configuration of First BC Node 211)

Since an exemplary hardware configuration of the first BC node 211 is specifically similar to the exemplary hardware configuration of the information processing device 100 illustrated in FIG. 3, description thereof will be omitted.

### (Exemplary Hardware Configuration of Second BC Node 221)

Since an exemplary hardware configuration of the second BC node 221 is specifically similar to the exemplary hardware configuration of the information processing device 100 illustrated in FIG. 3, description thereof will be omitted.

### (Exemplary Hardware Configuration of Third BC Node 231)

Since an exemplary hardware configuration of the third BC node 231 is specifically similar to the exemplary hardware configuration of the information processing device 100 illustrated in FIG. 3, description thereof will be omitted.

### (Exemplary Functional Configuration of Information Processing System 200)

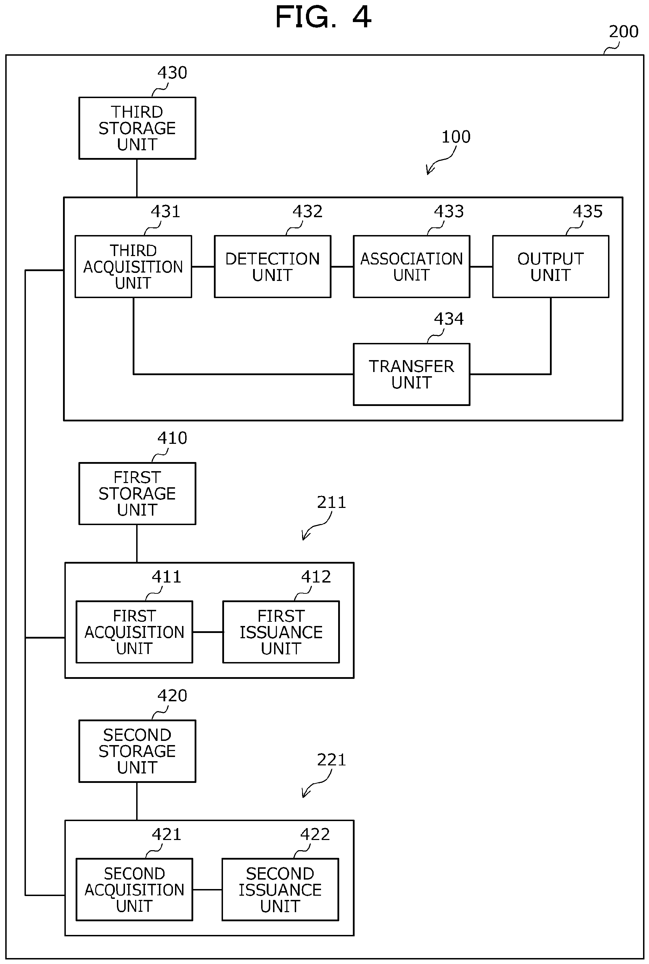

Next, an exemplary functional configuration of the information processing system 200 will be described with reference to FIG. 4.

FIG. 4 is a block diagram illustrating the exemplary functional configuration of the information processing system 200. In FIG. 4, the first BC node 211 includes a first storage unit 410, a first acquisition unit 411, and a first issuance unit 412.

The first storage unit 410 is implemented by, for example, a storage area such as the memory 302 or the recording medium 305 illustrated in FIG. 3. While a case where the first storage unit 410 is included in the information processing device 100 will be described below, it is not limited to this. For example, the first storage unit 410 may be included in a device different from the information processing device 100, and contents stored in the first storage unit 410 may be referred to by the information processing device 100.

Specifically, for example, the first acquisition unit 411 and the first issuance unit 412 implement functions thereof by causing the CPU 301 to execute a program stored in a storage area such as the memory 302 or the recording medium 305 illustrated in FIG. 3, or by the network I/F 303. A processing result of each functional unit is stored in, for example, a storage area such as the memory 302 or the recording medium 305 illustrated in FIG. 3.

The first storage unit 410 stores various types of information referred or updated in processing of each functional unit. The first storage unit 410 stores, for example, a first distributed ledger. The first distributed ledger records, for example, a Tx. The first storage unit 410 stores, for example, a token. The first storage unit 410 stores, for example, royalty information corresponding to the token. The royalty information indicates, for example, an address on the first BC 210 corresponding to the token. The royalty information may include, for example, a method for calculating the royalty. Specifically, the royalty information may include a calculation formula for calculating the royalty. The calculation formula is a formula indicating what percentage of a price of a commercial transaction using the token is the royalty. The token is, for example, an NFT. The token may be other than the NFT.

The first acquisition unit 411 obtains various types of information used for processing of each functional unit. The first acquisition unit 411 stores the obtained various types of information in the first storage unit 410, or outputs them to each functional unit. Furthermore, the first acquisition unit 411 may output the various types of information stored in the first storage unit 410 to each functional unit. The first acquisition unit 411 obtains the various types of information based on, for example, an operation input made by the operator. The first acquisition unit 411 may receive the various types of information from, for example, a device different from the information processing device 100.

The first acquisition unit 411 obtains, for example, an issuance request for requesting issuance of a Tx. The issuance request requests, for example, issuance of a first Tx including a first address on the first BC 210 and a third address on the third BC 230. The first Tx includes, for example, an issuer field and a message field. Specifically, the first Tx is a Tx in which the first address on the first BC 210 is set in the issuer field and the third address on the third BC 230 is set in message field.

Specifically, the first acquisition unit 411 obtains the issuance request by receiving it from another computer. Examples of the another computer include the client device 201. Specifically, the first acquisition unit 411 obtains the issuance request by receiving an input of the issuance request based on an operation input made by the operator. For example, the first acquisition unit 411 accepts the acquisition of the issuance request as a start trigger for starting processing of the first issuance unit 412.

The first issuance unit 412 issues a Tx in response to the issuance request, and registers it in the first distributed ledger. For example, the first issuance unit 412 identifies the first address on the first BC 210 and the third address on the third BC 230 based on the issuance request. Specifically, the first issuance unit 412 identifies the first address on the first BC 210 corresponding to the operator of the request source based on the issuance request. For example, the first issuance unit 412 issues a first Tx including the identified first address on the first BC 210 and the identified third address on the third BC 230, and registers it in the first distributed ledger. As a result, the first issuance unit 412 is enabled to leave a trail indicating that the valid operator having the first address has requested association of the first address with another address.

The second BC node 221 includes a second storage unit 420, a second acquisition unit 421, and a second issuance unit 422.

The second storage unit 420 is implemented by, for example, a storage area such as the memory 302 or the recording medium 305 illustrated in FIG. 3. While a case where the second storage unit 420 is included in the information processing device 100 will be described below, it is not limited to this. For example, the second storage unit 420 may be included in a device different from the information processing device 100, and contents stored in the second storage unit 420 may be referred to by the information processing device 100.

Specifically, for example, the second acquisition unit 421 and the second issuance unit 422 implement functions thereof by causing the CPU 301 to execute a program stored in a storage area such as the memory 302 or the recording medium 305 illustrated in FIG. 3, or by the network I/F 303. A processing result of each functional unit is stored in, for example, a storage area such as the memory 302 or the recording medium 305 illustrated in FIG. 3.

The second storage unit 420 stores various types of information referred or updated in processing of each functional unit. The second storage unit 420 stores, for example, a second distributed ledger. The second distributed ledger records, for example, a Tx. The second storage unit 420 stores, for example, a token. The second storage unit 420 stores, for example, royalty information corresponding to the token. The royalty information indicates, for example, an address on the second BC 220 corresponding to the token. The royalty information may include, for example, a method for calculating the royalty. Specifically, the royalty information may include a calculation formula for calculating the royalty. The calculation formula is a formula indicating what percentage of a price of a commercial transaction using the token is the royalty. The token is, for example, an NFT. The token may be other than the NFT.

The second acquisition unit 421 obtains, for example, an issuance request for requesting issuance of a Tx. The issuance request requests, for example, issuance of a second Tx including a second address on the second BC 220 and a fourth address on the third BC 230. The second Tx includes, for example, an issuer field and a message field. Specifically, the second Tx is a Tx in which the second address on the second BC 220 is set in the issuer field and the fourth address on the third BC 230 is set in message field.

Specifically, the second acquisition unit 421 obtains the issuance request by receiving it from another computer. Examples of the another computer include the client device 201. Specifically, the second acquisition unit 421 obtains the issuance request by receiving an input of the issuance request based on an operation input made by the operator. For example, the second acquisition unit 421 accepts the acquisition of the issuance request as a start trigger for starting processing of the second issuance unit 422.

The second issuance unit 422 issues a Tx in response to the issuance request, and registers it in the second distributed ledger. For example, the second issuance unit 422 identifies the second address on the second BC 220 and the fourth address on the third BC 230 based on the issuance request. Specifically, the second issuance unit 422 identifies the second address on the second BC 220 corresponding to the operator of the request source based on the issuance request. For example, the second issuance unit 422 issues a second Tx including the identified second address on the second BC 220 and the identified fourth address on the third BC 230, and registers it in the second distributed ledger. As a result, the second issuance unit 422 is enabled to leave a trail indicating that the valid operator having the second address has requested association of the second address with another address.

The information processing device 100 includes a third storage unit 430, a third acquisition unit 431, a detection unit 432, an association unit 433, a transfer unit 434, and an output unit 435.

The third storage unit 430 is implemented by, for example, a storage area such as the memory 302 or the recording medium 305 illustrated in FIG. 3. While a case where the third storage unit 430 is included in the information processing device 100 will be described below, it is not limited to this. For example, the third storage unit 430 may be included in a device different from the information processing device 100, and contents stored in the third storage unit 430 may be referred to by the information processing device 100.

The third acquisition unit 431 to the output unit 435 function as an exemplary control unit. Specifically, for example, the third acquisition unit 431 to the output unit 435 implement functions thereof by causing the CPU 301 to execute a program stored in a storage area such as the memory 302 or the recording medium 305 illustrated in FIG. 3, or by the network I/F 303. A processing result of each functional unit is stored in, for example, a storage area such as the memory 302 or the recording medium 305 illustrated in FIG. 3.

The third storage unit 430 stores various types of information referred or updated in processing of each functional unit.

The third acquisition unit 431 obtains various types of information used for processing of each functional unit. The third acquisition unit 431 stores the obtained various types of information in the third storage unit 430, or outputs them to each functional unit. Furthermore, the third acquisition unit 431 may output the various types of information stored in the third storage unit 430 to each functional unit. The third acquisition unit 431 obtains the various types of information based on, for example, an operation input made by the operator. The third acquisition unit 431 may receive the various types of information from, for example, a device different from the information processing device 100.

For example, the third acquisition unit 431 obtains an association request for requesting association of the first address and the second address. The association request includes, for example, the first address on the first BC 210 and the second address on the second BC 220. Specifically, the third acquisition unit 431 obtains the association request by receiving it from another computer. Examples of the another computer include the client device 201. Specifically, the third acquisition unit 431 may obtain the association request by receiving an input of the association request based on an operation input made by the operator.

The third acquisition unit 431 obtains a transfer request for requesting transfer of the token on the first BC 210 associated with the first address onto the second BC 220. Specifically, the third acquisition unit 431 obtains the transfer request by receiving it from another computer. Examples of the another computer include the client device 201. Specifically, the third acquisition unit 431 may obtain the transfer request by receiving an input of the transfer request based on an operation input made by the operator.

The third acquisition unit 431 may receive a start trigger for starting processing of any functional unit. The start trigger is, for example, a predetermined operation input made by the operator. The start trigger may be, for example, reception of predetermined information from another computer. The start trigger may be, for example, an output of predetermined information from any functional unit.

Specifically, the third acquisition unit 431 may accept the acquisition of the association request as a start trigger for starting processing of the detection unit 432 and the association unit 433. Specifically, the third acquisition unit 431 may accept the acquisition of the transfer request as a start trigger for starting processing of the transfer unit 434.

The detection unit 432 detects the first Tx including the first address and the third address on the third BC 230 issued by the first BC 210 based on the first address included in the association request obtained by the third acquisition unit 431. For example, the detection unit 432 detects the first Tx by searching the first distributed ledger for the first Tx in which the first address is set in the issuer field using the first address as a key. The detection unit 432 identifies the third address based on the detected first Tx. As a result, the detection unit 432 is enabled to obtain a guideline for determining whether or not to associate the first address with the second address. Furthermore, the detection unit 432 is enabled to ensure the validity of the association of the first address with the second address based on the fact that the first BC 210 has a property of not issuing the first Tx in response to a request from an operator other than the operator having the first address.

The detection unit 432 detects the second Tx including the second address and the fourth address on the third BC 230 issued by the second BC 220 based on the second address included in the association request obtained by the third acquisition unit 431. For example, the detection unit 432 detects the second Tx by searching the second distributed ledger for the second Tx in which the second address is set in the issuer field using the second address as a key. The detection unit 432 identifies the fourth address based on the detected second Tx. As a result, the detection unit 432 is enabled to obtain a guideline for determining whether or not to associate the first address with the second address. Furthermore, the detection unit 432 is enabled to ensure the validity of the association of the first address with the second address based on the fact that the second BC 220 has a property of not issuing the second Tx in response to a request from an operator other than the operator having the second address.

The association unit 433 determines whether or not to associate the first address with the second address. For example, the association unit 433 determines whether or not the third address and the fourth address match based on the first Tx detected by the detection unit 432 and the second Tx detected by the detection unit 432. For example, when the third address and the fourth address are determined to match, the association unit 433 determines to associate the first address with the second address. For example, when the third address and the fourth address are determined not to match, the association unit 433 determines not to associate the first address with the second address. As a result, the association unit 433 is enabled to appropriately determine whether or not to associate the first address with the second address. For example, since the third address and the fourth address match, the association unit 433 is enabled to ensure that the operator having the first address and the operator having the second address are the same.

For example, the association unit 433 may determine whether or not the third address and the fourth address are valid addresses on the third BC 230. For example, when the third address and the fourth address are determined to match but are not determined as valid addresses on the third BC 230, the association unit 433 determines not to associate the first address with the second address. As a result, for example, since both the third address and the fourth address are addresses included in the third BC 230, the association unit 433 is enabled to guarantee the validity of the user having the first address and the second address.

In a case where at least one of the detected first Tx or the detected second Tx has not been issued during a period from the current point in time to a point in time a predetermined time before, the association unit 433 determines not to associate the first address with the second address. As a result, the association unit 433 is enabled to determine that the operator does not intend to associate the first address with the second address from a temporal viewpoint. Thus, the association unit 433 is enabled to appropriately determine whether or not to associate the first address with the second address.

In a case where at least one of the first Tx or the second Tx is not detected within a certain period of time after the acquisition of the association request, the association unit 433 determines not to associate the first address with the second address. As a result, the association unit 433 is enabled to determine that the operator does not intend to associate the first address with the second address. Thus, the association unit 433 is enabled to appropriately determine whether or not to associate the first address with the second address.

For example, the first address and the second address are determined to be associated, the association unit 433 registers a result of associating the first address with the second address in the third BC 230. As a result, the association unit 433 is enabled to make it possible to refer to and to verify the result of associating the first address with the second address thereafter.

The transfer unit 434 identifies, based on the transfer request, the token to be transferred, the first BC 210 of the transfer source, and the second BC 220 of the transfer destination. In response to the acquisition of the transfer request, the transfer unit 434 burns the identified token on the identified first BC 210, and generates the identified token on the identified second BC 220.

For example, the transfer unit 434 refers to the identified first BC 210, and identifies the first address based on the royalty information corresponding to the identified token. For example, the transfer unit 434 refers to the third BC 230, and searches for the second address on the second BC 220 corresponding to the identified first address. For example, the transfer unit 434 determines not to transfer the token when there is no second address on the second BC 220 corresponding to the first address.

On the other hand, for example, when there is the second address on the second BC 220 corresponding to the first address, the transfer unit 434 determines to transfer the token, burns the identified token on the identified first BC 210, and generates the identified token on the identified second BC 220. For example, when it is determined to transfer the token, the transfer unit 434 associates the second address with the generated token on the second BC 220. Specifically, the transfer unit 434 controls the second BC 220 to associate the royalty information including the second address with the token on the second BC 220.

As a result, the transfer unit 434 is enabled to appropriately transfer the token. The transfer unit 434 is enabled to associate an appropriate address with the token on the second BC 220. For example, the transfer unit 434 is enabled to associate appropriate royalty information with the token on the second BC 220.

The output unit 435 outputs a processing result of at least any one of the functional units. Examples of an output format include display on a display, print output to a printer, transmission to an external device by the network I/F 303, and storage in a storage area such as the memory 302 or the recording medium 305. As a result, the output unit 435 is enabled to make it possible to notify the operator of a processing result of at least any one of the functional units, and to improve the convenience of the information processing device 100.

For example, the output unit 435 outputs a result of the determination on whether or not to associate the first address with the second address made by the association unit 433. Specifically, the output unit 435 outputs the result of the determination on whether or not to associate the first address with the second address made by the association unit 433 such that the operator may refer to the result. Specifically, the output unit 435 may transmit, to another computer, the result of the determination on whether or not to associate the first address with the second address made by the association unit 433. As a result, the output unit 435 is enabled to make it possible to refer to whether or not the first address is associated with the second address by the association unit 433 externally.

For example, the output unit 435 outputs information indicating whether or not the token has been transferred by the transfer unit 434. Specifically, the output unit 435 outputs the information indicating whether or not the token has been transferred by the transfer unit 434 such that the operator may refer to the information. Specifically, the output unit 435 may transmit the information indicating whether or not the token has been transferred by the transfer unit 434 to another computer. As a result, the output unit 435 is enabled to make it possible to refer to whether or not the token has been transferred by the transfer unit 434 externally.

### (Exemplary Operation of Information Processing System 200)

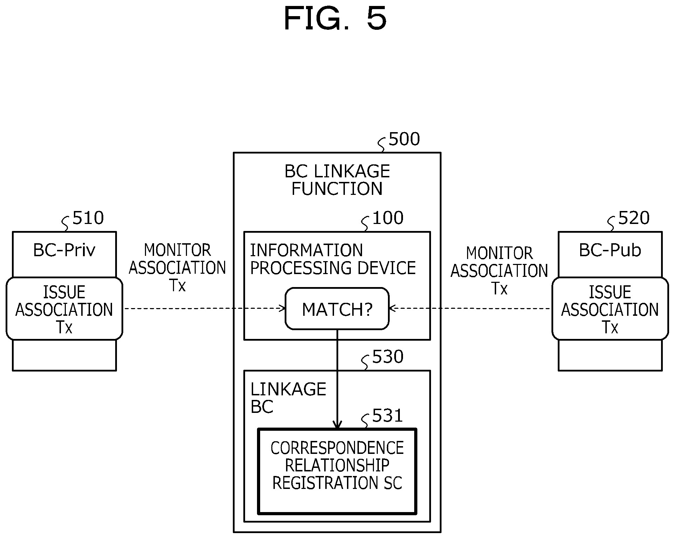

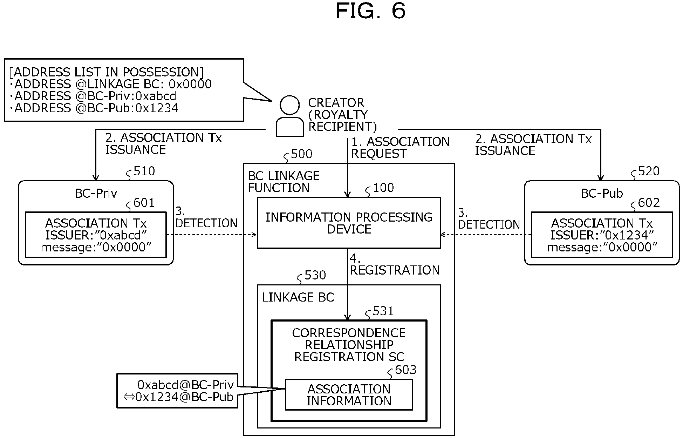

Next, exemplary operation of the information processing system 200 will be described with reference to FIGs. 5 and 6.

FIGs. 5 and 6 are explanatory diagrams illustrating exemplary operation of the information processing system 200. In FIG. 5, there are a BC-Priv 510 and a BC-Pub 520. The BC-Priv 510 corresponds to, for example, the first BC 210 described above. The BC-Pub 520 corresponds to, for example, the second BC 220 described above. The information processing device 100 manages a linkage BC 530. The linkage BC 530 corresponds to, for example, the third BC 230 described above. The information processing device 100 implements a BC linkage function 500 together with the linkage BC 530.

In response to a request from a creator, the BC-Priv 510 issues an association Tx including an address on the BC-Priv 510 as an issuer and including an address on the linkage BC 530 as a message. In response to a request from the creator, the BC-Pub 520 issues an association Tx including an address on the BC-Pub 520 as an issuer and including an address on the linkage BC 530 as a message.

By detecting each association Tx, the information processing device 100 is enabled to distribute verification processing for verifying the validity of association of the address on the BC-Priv 510 with the address on the BC-Pub 520. When a correspondence relationship between the address on the BC-Priv 510 and the address on the BC-Pub 520 is valid, the information processing device 100 may register the correspondence relationship in a correspondence relationship registration SC 531 of the linkage BC 530 to secure the evidence.

Here, there is a property that a BC does not issue a Tx including an address on the BC as an issuer in response to a request other than the request from a creator having the address on the BC. Furthermore, there is a property that a BC may issue a Tx regardless of a type of the BC. Based on those properties, the information processing device 100 is enabled to secure the flexibility of the verification processing for verifying the validity of the association of the address on the BC-Priv 510 with the address on the BC-Pub 520. The flexibility indicates that there are various environments in which the verification processing may be implemented.

Furthermore, each of the association Tx on the BC-Priv 510, the association Tx on the BC-Pub 520, and the correspondence relationship on the linkage BC may be checked by a third party, and has tamper resistance. Thus, the information processing device 100 is enabled to secure the neutrality of the verification processing for verifying the validity of the association of the address on the BC-Priv 510 with the address on the BC-Pub 520. Next, description of FIG. 6 will be made.

In FIG. 6, there is an NFT on the BC-Priv 510. The creator of the NFT has an address Oxabcd on the BC-Priv 510, an address 0x1234 on the BC-Pub 520, and an address 0x0000 on the linkage BC 530.

Each of the BCs may issue a Tx. The Tx includes, for example, an issuer field and a message field. For example, only the creator may issue a Tx including each of the addresses in the issuer field in each of the BCs.

The creator is a recipient of the royalty for the NFT on the BC-Priv 510. The address Oxabcd corresponding to the creator is registered on the BC-Priv 510 as a payee of the royalty for the NFT. The creator wants to transfer the NFT on the BC-Priv 510 onto the BC-Pub 520.

(6-1) The client device 201 obtains a plurality of addresses to be associated and the address 0x0000 on the linkage BC 530 owned by the creator based on an operation input made by the creator. The association target is, for example, the address Oxabcd on the BC-Priv 510 and the address 0x1234 on the BC-Pub 520. The client device 201 generates an association request using the obtained address 0x0000 on the linkage BC 530, and transmits it to the information processing device 100. The association request includes the address 0x0000 on the linkage BC 530 as an address of a sender. The association request includes, for example, the plurality of addresses to be associated. Specifically, in the example of FIG. 6, the association request includes the address Oxabcd on the BC-Priv 510 and the address 0x1234 on the BC-Pub 520 as the association target.

The information processing device 100 obtains the address 0x0000 on the linkage BC 530 as an address of the sender. The information processing device 100 starts to monitor the Tx on the BC-Priv 510 and the Tx on the BC-Pub 520 in response to the association request. For example, the information processing device 100 obtains the address Oxabcd on the BC-Priv 510 and the address 0x1234 on the BC-Pub 520 based on the association request. For example, the information processing device 100 starts to monitor the Tx including the address Oxabcd in the issuer field on the BC-Priv 510 based on the obtained address Oxabcd on the BC-Priv 510. For example, the information processing device 100 starts to monitor the Tx including the address 0x1234 in the issuer field on the BC-Pub 520 based on the obtained address 0x1234 on the BC-Pub 520.

(6-2) The client device 201 transmits an issuance request to the BC-Priv 510 based on the address Oxabcd on the BC-Priv 510 obtained as the association target and the obtained address 0x0000 on the linkage BC 530. The issuance request requests issuance of a Tx. For example, the issuance request requests issuance of a Tx in which the address Oxabcd on the BC-Priv 510 is set in the issuer field and the address 0x0000 on the linkage BC 530 is set in the message field.

In response to the issuance request, the BC-Priv 510 issues an association Tx 601 in which the address Oxabcd on the BC-Priv 510 is set in the issuer field and the address 0x0000 on the linkage BC 530 is set in the message field. The BC-Priv 510 registers the issued association Tx 601 in the distributed ledger managed by the BC-Priv 510. Since the association Tx 601 includes the address 0x0000 on the linkage BC 530, it may indicate that the Tx has been intentionally issued by the creator. Since the association Tx 601 includes the address Oxabcd on the BC-Priv 510, it may be guaranteed that the address Oxabcd is the association target.

The client device 201 transmits an issuance request to the BC-Priv 510 based on the address 0x1234 on the BC-Pub 520 obtained as the association target and the obtained address 0x0000 on the linkage BC 530. The issuance request requests issuance of a Tx. For example, the issuance request requests issuance of a Tx in which the address 0x1234 on the BC-Pub 520 is set in the issuer field and the address 0x0000 on the linkage BC 530 is set in the message field.

In response to the issuance request, the BC-Pub 520 issues an association Tx 602 in which the address 0x1234 on the BC-Pub 520 is set in the issuer field and the address 0x0000 on the linkage BC 530 is set in the message field. The BC-Pub 520 registers the issued association Tx 602 in the distributed ledger managed by the BC-Pub 520. Since the association Tx 602 includes the address 0x0000 on the linkage BC 530, it may indicate that the Tx has been intentionally issued by the creator. Since the association Tx 602 includes the address 0x1234 on the BC-Pub 520, it may be guaranteed that the address 0x1234 is the association target.

(6-3) The information processing device 100 detects the association Tx 601 including the address Oxabcd in the issuer field on the BC-Priv 510. The information processing device 100 obtains the address on the linkage BC 530 set in the message field of the detected association Tx 601. Specifically, the information processing device 100 obtains the address 0x0000 on the linkage BC 530 set in the message field of the association Tx 601.

The information processing device 100 detects the association Tx 602 including the address 0x1234 in the issuer field on the BC-Pub 520. The information processing device 100 obtains the address on the linkage BC 530 set in the message field of the detected association Tx 602. Specifically, in the example of FIG. 6, the information processing device 100 obtains the address 0x0000 on the linkage BC 530 set in the message field of the detected association Tx 602.

The information processing device 100 determines whether or not the address on the linkage BC 530 set in the message field of the association Tx 601 matches the address on the linkage BC 530 set in the message field of the association Tx 602. Here, when they match, the association Tx 601 and the association Tx 602 are the Tx issued by the same creator. On the other hand, when they do not match, the association Tx 601 and the association Tx 602 may not be the Tx issued by the same creator.

Thus, when they are determined to match, the information processing device 100 determines that the correspondence relationship is valid between the address Oxabcd on the BC-Priv 510 and the address 0x1234 on the BC-Pub 520, which have been obtained as the association target. On the other hand, when they are determined not to match, the information processing device 100 determines that the correspondence relationship is not valid between the address Oxabcd on the BC-Priv 510 and the address 0x1234 on the BC-Pub 520, which have been obtained as the association target. Specifically, in the example of FIG. 6, the information processing device 100 determines that the correspondence relationship is valid between the address Oxabcd on the BC-Priv 510 and the address 0x1234 on the BC-Pub 520, which have been obtained as the association target.

(6-4) When it is determined that the correspondence relationship between the address Oxabcd on the BC-Priv 510 and the address 0x1234 on the BC-Pub 520 is valid, the information processing device 100 registers the correspondence relationship in the correspondence relationship registration SC 531 of the linkage BC 530. For example, the information processing device 100 generates association information 603 indicating that the address Oxabcd on the BC-Priv 510 corresponds to the address 0x1234 on the BC-Pub 520. For example, the information processing device 100 registers the association information 603 in the correspondence relationship registration SC 531 of the linkage BC 530.

As a result, the information processing device 100 is enabled to perform the verification processing for verifying the validity of the association of the address Oxabcd on the BC-Priv 510 with the address 0x1234 on the BC-Pub 520. The information processing device 100 is enabled to distribute the verification processing based on the association Tx 601 and the association Tx 602. Furthermore, the information processing device 100 is enabled to secure the flexibility of the verification processing based on the association Tx 601 and the association Tx 602. Furthermore, since it is not possible for an attacker to issue the association Tx 601 and the association Tx 602, the information processing device 100 is enabled to avoid erroneous association of two addresses on BCs different from each other due to an attack by the attacker.

Since the correspondence relationship between the address Oxabcd on the BC-Priv 510 and the address 0x1234 on the BC-Pub 520 is registered in the correspondence relationship registration SC 531 of the linkage BC 530, the information processing device 100 is enabled to secure the evidence. Here, each of the association Tx 601, the association Tx 602, and the association information 603 may be checked by the third party, and has tamper resistance. Thus, the information processing device 100 is enabled to secure the neutrality of the verification processing. In view of the above, the information processing device 100 is enabled to make it possible to easily transfer the royalty information at the time of transferring the NFT on the BC-Priv 510 onto the BC-Pub 520.

### (Specific Example of Operation of Information Processing System 200)

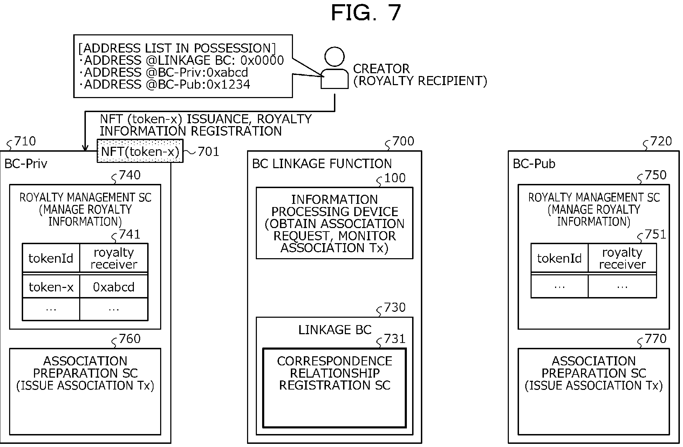

Next, a specific example of the operation of the information processing system 200 will be described with reference to FIGs. 7 to 11.

FIGs. 7 to 11 are explanatory diagrams illustrating a specific example of the operation of the information processing system 200. In FIG. 7, there are a BC-Priv 710 and a BC-Pub 720. The BC-Priv 710 corresponds to, for example, the first BC 210 described above. The BC-Pub 720 corresponds to, for example, the second BC 220 described above. The information processing device 100 manages a linkage BC 730. The linkage BC 730 corresponds to, for example, the third BC 230 described above.

The information processing device 100 implements a BC linkage function 700 together with the linkage BC 730. The linkage BC 730 includes a correspondence relationship registration SC 731. The correspondence relationship registration SC 731 manages association information indicating that two addresses on different BCs correspond to each other. The correspondence relationship registration SC 731 manages, for example, the association information indicating that an address on the BC-Priv 710 corresponds to an address on the BC-Pub 720.

The BC-Priv 710 includes a royalty management SC 740. The royalty management SC 740 manages royalty information. The royalty information may include, for example, a calculation formula indicating what percentage of a price of a commercial transaction using the NFT is the royalty. For example, the royalty management SC 740 includes a royalty information management table 741 for registering the royalty information, and stores the royalty information.

As illustrated in FIG. 7, the royalty information management table 741 includes fields of a token ID and a royalty receiver. In the royalty information management table 741, royalty information is stored as a record by setting information in each field for each NFT on the BC-Priv 710.

In the field of the token ID, a token ID for identifying the NFT on the BC-Priv 710 is set. In the field of the royalty receiver, an address on the BC-Priv 710 indicating a payee of the royalty for the NFT described above is set. The royalty information management table 741 may further include a royalty field (not illustrated). In the royalty field, a calculation formula indicating what percentage of a price of a commercial transaction using the NFT is the royalty is set.

The BC-Pub 720 includes a royalty management SC 750. The royalty management SC 750 manages royalty information. The royalty information may include, for example, a calculation formula indicating what percentage of a price of a commercial transaction using the NFT is the royalty. For example, the royalty management SC 750 includes a royalty information management table 751 for registering the royalty information, and stores the royalty information.

As illustrated in FIG. 7, the royalty information management table 751 includes fields of a token ID and a royalty receiver. In the royalty information management table 751, royalty information is stored as a record by setting information in each field for each NFT on the BC-Pub 720.

In the field of the token ID, a token ID for identifying the NFT on the BC-Pub 720 is set. In the field of the royalty receiver, an address on the BC-Pub 720 indicating the payee of the royalty for the NFT described above is set. The royalty information management table 751 may further include a royalty field (not illustrated). In the royalty field, a calculation formula indicating what percentage of a price of a commercial transaction using the NFT is the royalty is set.

The BC-Priv 710 includes an association preparation SC 760. The association preparation SC 760 issues and manages the association Tx. The BC-Pub 720 includes an association preparation SC 770. The association preparation SC 770 issues and manages the association Tx.

The creator has an address Oxabcd on the BC-Priv 710, an address 0x1234 on the BC-Pub 720, and an address 0x0000 on the linkage BC 730. The creator wants to generate an NFT on the BC-Priv 710.

The client device 201 generates, based on an operation input made by the creator, a generation request for requesting generation of the NFT using the address Oxabcd on the BC-Priv 710, and transmits it to the BC-Priv 710. In response to the generation request, the BC-Priv 710 generates an NFT 701 with the token ID of token-x, and registers it in the distributed ledger.

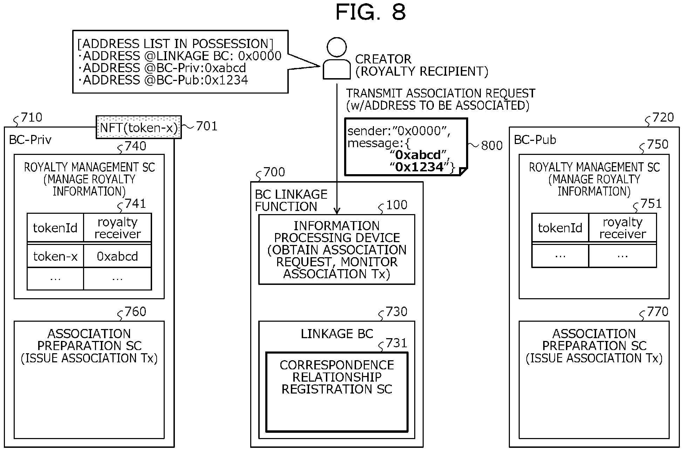

The royalty management SC 740 in the BC-Priv 710 sets, on the BC-Priv 710, the address Oxabcd representing the transmission source of the generation request as the royalty receiver, which is the payee of the royalty for the NFT 701. The royalty management SC 740 generates royalty information in which the token ID of token-x of the NFT 701 is associated with the royalty receiver of the address Oxabcd, and registers it in the royalty information management table 741. Next, description of FIG. 8 will be made.

In FIG. 8, the creator wants to transfer the NFT 701 on the BC-Priv 710 onto the BC-Pub 720. The client device 201 obtains the address Oxabcd on the BC-Priv 710 and the address 0x1234 on the BC-Pub 720, which are to be associated, based on an operation input made by the creator. The client device 201 obtains the address 0x0000 on the linkage BC 730 owned by the creator based on the operation input made by the creator.

The client device 201 generates an association request 800 using the obtained address 0x0000 on the linkage BC 730, and transmits it to the information processing device 100. The association request 800 includes a sender field representing an address of a sender and a message field. The association request 800 includes the address 0x0000 on the linkage BC 730 in the sender field. The association request 800 includes, as an association target, the address Oxabcd on the BC-Priv 710 and the address 0x1234 on the BC-Pub 720 in the message field.

The information processing device 100 receives the association request 800. In response to the association request 800, the information processing device 100 obtains, as an address of the sender, the address 0x0000 on the linkage BC 730 set in the sender field. The information processing device 100 starts to monitor the Tx on the BC-Priv 710 and the Tx on the BC-Pub 720 in response to the association request 800.

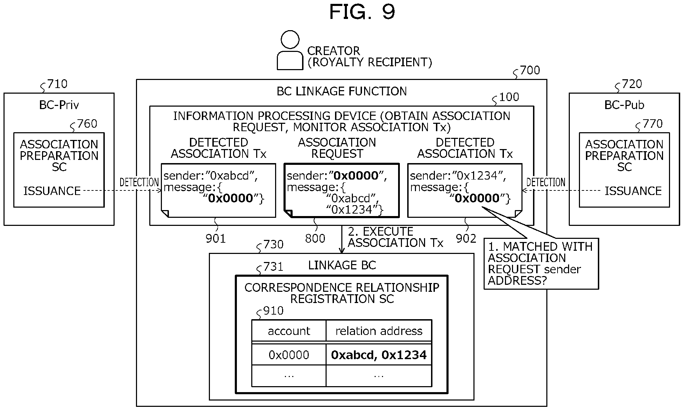

For example, the information processing device 100 obtains, based on the association request 800, the address Oxabcd on the BC-Priv 710 and the address 0x1234 on the BC-Pub 720 set in the message field. For example, the information processing device 100 starts to monitor the Tx including the address Oxabcd in the sender field on the BC-Priv 710 based on the obtained address Oxabcd on the BC-Priv 710. An address indicating an issuer is set in the sender field. For example, the information processing device 100 starts to monitor the Tx including the address 0x1234 in the sender field on the BC-Pub 720 based on the obtained address 0x1234 on the BC-Pub 720. Next, description of FIG. 9 will be made.

In FIG. 9, the client device 201 transmits an issuance request to the BC-Priv 710 based on the address Oxabcd on the BC-Priv 710 obtained as the association target and the obtained address 0x0000 on the linkage BC 730. The issuance request requests issuance of an association Tx in which the address Oxabcd on the BC-Priv 710 is set in the sender field and the address 0x0000 on the linkage BC 730 is set in the message field.

In response to the issuance request, the association preparation SC 760 issues an association Tx 901 in which the address Oxabcd on the BC-Priv 710 is set in the sender field and the address 0x0000 on the linkage BC 730 is set in the message field. The association preparation SC 760 registers the issued association Tx 901 in the distributed ledger managed by the BC-Priv 710. Since the association Tx 901 includes the address 0x0000 on the linkage BC 730, it may indicate that the Tx has been intentionally issued by the creator. Since the association Tx 901 includes the address Oxabcd on the BC-Priv 710, it may be guaranteed that the address Oxabcd is the association target.

The client device 201 transmits an issuance request to the BC-Priv 710 based on the address 0x1234 on the BC-Pub 720 obtained as the association target and the obtained address 0x0000 on the linkage BC 730. The issuance request requests issuance of an association Tx 902 in which the address 0x1234 on the BC-Pub 720 is set in the sender field and the address 0x0000 on the linkage BC 730 is set in the message field.

In response to the issuance request, the BC-Pub 720 issues the association Tx 902 in which the address 0x1234 on the BC-Pub 720 is set in the sender field and the address 0x0000 on the linkage BC 730 is set in the message field. The BC-Pub 720 registers the issued association Tx 902 in the distributed ledger managed by the BC-Pub 720. Since the association Tx 902 includes the address 0x0000 on the linkage BC 730, it may indicate that the Tx has been intentionally issued by the creator. Since the association Tx 902 includes the address 0x1234 on the BC-Pub 720, it may be guaranteed that the address 0x1234 is the association target.

(9-1) The information processing device 100 detects the association Tx 901 including the address Oxabcd in the sender field on the BC-Priv 710. The information processing device 100 obtains the address 0x0000 on the linkage BC 730 set in the message field of the detected association Tx 901.

The information processing device 100 detects the association Tx 902 including the address 0x1234 in the sender field on the BC-Pub 720. The information processing device 100 obtains the address 0x0000 on the linkage BC 730 set in the message field of the detected association Tx 902.

The information processing device 100 determines whether or not the address on the linkage BC 730 obtained from the association Tx 901, the address on the linkage BC 730 obtained from the association Tx 902, and the address on the linkage BC 730 obtained from the association request 800 match. Here, when they match, the association Tx 901 and the association Tx 902 are the Tx issued by the creator who is the sender of the association request 800. On the other hand, when they do not match, the association Tx 901 and the association Tx 902 may not be the Tx issued by the creator who is the sender of the association request 800.

Thus, when they are determined to match, the information processing device 100 determines that the correspondence relationship is valid between the address Oxabcd on the BC-Priv 710 and the address 0x1234 on the BC-Pub 720, which have been obtained as the association target. On the other hand, when they are determined not to match, the information processing device 100 determines that the correspondence relationship is not valid between the address Oxabcd on the BC-Priv 710 and the address 0x1234 on the BC-Pub 720, which have been obtained as the association target.

Specifically, since they are determined to match in the example of FIG. 9, the information processing device 100 determines that the correspondence relationship is valid between the address Oxabcd on the BC-Priv 710 and the address 0x1234 on the BC-Pub 720, which have been obtained as the association target. As a result, the information processing device 100 is enabled to ensure the validity of the association of the address Oxabcd on the BC-Priv 710 with the address 0x1234 on the BC-Pub 720.

(9-2) Since it is determined that the correspondence relationship between the address Oxabcd on the BC-Priv 710 and the address 0x1234 on the BC-Pub 720 is valid, the information processing device 100 registers the correspondence relationship in the correspondence relationship registration SC 731 of the linkage BC 730. For example, the information processing device 100 generates association information indicating that the address Oxabcd on the BC-Priv 710 corresponds to the address 0x1234 on the BC-Pub 720 in association with the address 0x0000 on the linkage BC 730.

For example, the association information includes, as the association target, the address Oxabcd on the BC-Priv 710 and the address 0x1234 on the BC-Pub 720 in association with the address 0x0000 on the linkage BC 730. For example, the information processing device 100 transmits the association information to the correspondence relationship registration SC 731 of the linkage BC 730, and executes the correspondence relationship registration SC 731. The correspondence relationship registration SC 731 registers the received association information in an association information management table 910.

As illustrated in FIG. 9, the association information management table 910 includes fields of an account and a relation address. In the association information management table 910, association information is stored as a record by setting information in each field for each address on the linkage BC 730.

In the field of the account, an address on the linkage BC 730 is set. In the field of the relation address, a pair of two addresses on BCs different from each other associated with the address on the linkage BC 730 described above is set. Examples of the pair include an address on the BC-Priv 710 and an address on the BC-Pub 720.

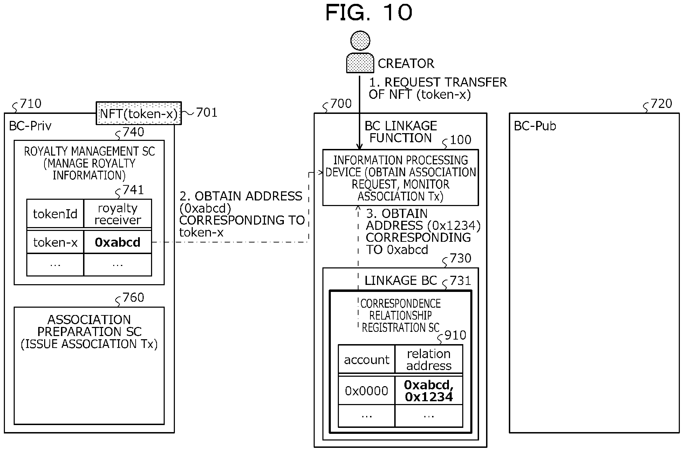

As a result, the information processing device 100 is enabled to allow the third party to check the association information, and is enabled to ensure the evidence for the association of the address on the BC-Priv 710 with the address on the BC-Pub 720. Here, since it is not possible for an attacker to issue the association Tx 901 and the association Tx 902, the information processing device 100 is enabled to avoid erroneous association of two addresses on BCs different from each other due to an attack by the attacker. Next, description of FIG. 10 will be made.

In FIG. 10, (10-1) the client device 201 generates a transfer request for requesting transfer of the NFT 701 on the BC-Priv 710 with the token ID of token-x to the BC-Pub 720 based on an operation input made by the creator. The client device 201 transmits the generated transfer request to the information processing device 100. The transfer request includes, for example, the token ID of token-x. The transfer request includes, for example, information for identifying the BC-Priv 710 as a transfer source and information for identifying the BC-Pub 720 as a transfer destination.

(10-2) The information processing device 100 receives the transfer request from the client device 201. The information processing device 100 obtains the token ID of token-x based on the transfer request. The information processing device 100 identifies the BC-Priv 710 as the transfer source and the BC-Pub 720 as the transfer destination based on the transfer request. The information processing device 100 obtains the royalty information corresponding to the obtained token ID of token-x from the identified BC-Priv 710 as the transfer source.

The information processing device 100 obtains the address Oxabcd on the BC-Priv 710 representing the payee of the royalty for the NFT 701 based on the field of the royalty receiver of the obtained royalty information. The information processing device 100 may obtain a calculation formula for calculating the royalty based on the obtained royalty information.

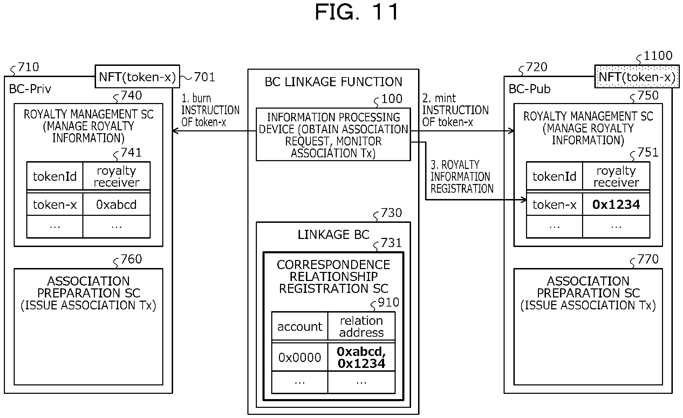

(10-3) The information processing device 100 inquires of the correspondence relationship registration SC 731 about the association information including the address Oxabcd using the obtained address Oxabcd on the BC-Priv 710 as a key. The information processing device 100 obtains, from the correspondence relationship registration SC 731, the association information indicating that the address Oxabcd on the BC-Priv 710 corresponds to the address 0x1234 on the BC-Pub 720. The information processing device 100 determines the address 0x1234 on the BC-Pub 720 as a new payee of the royalty based on the obtained association information. Next, description of FIG. 11 will be made.

In FIG. 11, (11-1) The information processing device 100 controls the BC-Priv 710 to burn the NFT 701 on the BC-Priv 710 with the token ID of token-x. For example, the information processing device 100 transmits, to the BC-Priv 710, a burn instruction for requesting burning of the NFT 701 on the BC-Priv 710 with the token ID of token-x. The BC-Priv 710 burns the NFT 701 with the token ID of token-x according to the burn instruction.

(11-2) The information processing device 100 controls the BC-Pub 720 to generate an NFT 1100 having the same contents as the NFT 701 on the BC-Priv 710 with the token ID of token-x. For example, the information processing device 100 transmits, to the BC-Pub 720, a mint instruction for requesting generation of the NFT 1100. The BC-Pub 720 generates the NFT 1100 according to the mint instruction. The BC-Pub 720 transmits the token ID of token-x of the NFT 1100 to the information processing device 100. While the token ID of the NFT 701 and the token ID of the NFT 1100 are assumed to be the same for convenience here, it is not limited to this. For example, the token ID of the NFT 701 and the token ID of the NFT 1100 may be different.

(11-3) The information processing device 100 receives the token ID of token-x of the NFT 1100. The information processing device 100 transmits, to the BC-Pub 720, a registration request for requesting registration of the address 0x1234 on the BC-Pub 720 determined as the new payee of the royalty and the received token ID of token-x of the NFT 1100 in association with each other. The registration request includes the address 0x1234 on the BC-Pub 720, which represents the payee of the royalty, and the token ID of token-x of the NFT 1100. The registration request may include, for example, the calculation formula for calculating the royalty obtained by the information processing device 100.

The royalty management SC 750 in the BC-Pub 720 receives the registration request from the information processing device 100. The royalty management SC 750 sets, based on the registration request, the address 0x1234 on the BC-Pub 720 as the royalty receiver, which is the payee of the royalty for the NFT 1100. The royalty management SC 740 generates royalty information in which the token ID of token-x of the NFT 1100 is associated with the royalty receiver of the address 0x1234, and registers it in the royalty information management table 751. The royalty management SC 740 may include a calculation formula for calculating the royalty in the royalty information.

As a result, the information processing device 100 is enabled to substantially transfer the NFT 701 on the BC-Priv 710 to the BC-Pub 720. The information processing device 100 is enabled to substantially transfer the royalty information corresponding to the NFT 701 on the BC-Priv 710 to the NFT 1100 on the BC-Pub 720.

### (Association Processing Procedure)

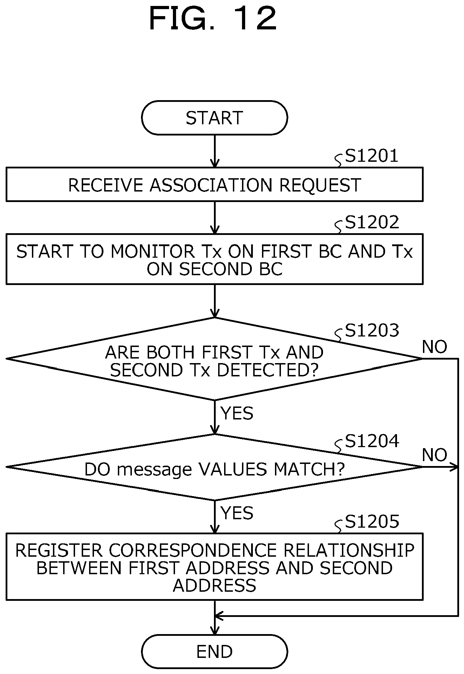

Next, an exemplary association processing procedure to be executed by the information processing device 100 will be described with reference to FIG. 12. The association process is implemented by, for example, the CPU 301, a storage area such as the memory 302 or the recording medium 305, and the network I/F 303 illustrated in FIG. 3.

FIG. 12 is a flowchart illustrating the exemplary association processing procedure. In FIG. 12, the information processing device 100 receives, from the client device 201, an association request for requesting association of the first address on the first BC 210 with the second address on the second BC 220 (step S1201). The association request includes, for example, an identifier of the first BC 210, the first address on the first BC 210, an identifier of the second BC 220, and the second address on the second BC 220. In response to the reception of the association request, the information processing device 100 identifies the first BC 210 and the second BC 220, and starts to monitor the Tx on the first BC 210 and the Tx on the second BC 220 (step S1202).

The information processing device 100 determines whether or not both the first Tx on the first BC 210 including the first address and the second Tx on the second BC 220 including the second address have been detected within a certain period of time from the start of the monitoring (step S1203). Here, if both the first Tx and the second Tx are detected (Yes in step S1203), the information processing device 100 proceeds to processing of step S1204. On the other hand, if at least one of the first Tx or the second Tx is not detected (No in step S1203), the information processing device 100 terminates the association process.

In step S1204, the information processing device 100 determines whether or not a value of the message in the first Tx matches a value of the message in the second Tx (step S1204). Here, if they do not match (No in step S1204), the information processing device 100 terminates the association process. On the other hand, if they match (Yes in step S1204), the information processing device 100 proceeds to processing of step S1205.

In step S1205, the information processing device 100 registers a correspondence relationship between the first address and the second address in the third BC 230 (step S1205). Then, the information processing device 100 terminates the association process. As a result, the information processing device 100 is enabled to associate the first address with the second address. The information processing device 100 is enabled to ensure the validity of the correspondence relationship between the first address and the second address.

### (Transfer Processing Procedure)

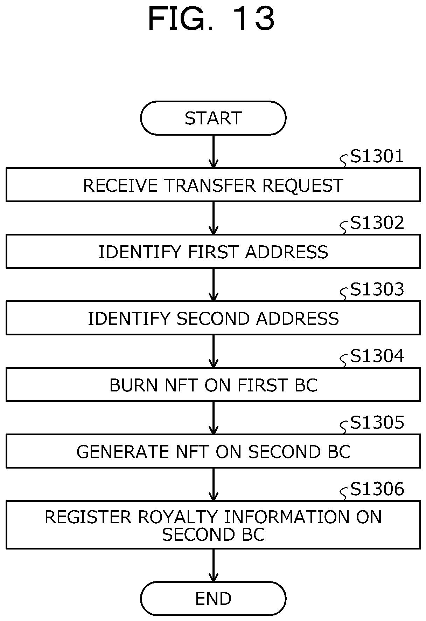

Next, an exemplary transfer processing procedure to be executed by the information processing device 100 will be described with reference to FIG. 13. The transfer process is implemented by, for example, the CPU 301, a storage area such as the memory 302 or the recording medium 305, and the network I/F 303 illustrated in FIG. 3.

FIG. 13 is a flowchart illustrating the exemplary transfer processing procedure. In FIG. 13, the information processing device 100 receives a transfer request for requesting transfer of the NFT on the first BC 210 onto the second BC 220 (step S1301). The transfer request includes, for example, an identifier of the first BC 210 as a transfer source, an identifier of the NFT on the first BC 210, and an identifier of the second BC 220 as a transfer destination.

The information processing device 100 refers to the first BC 210, and identifies the first address to which the royalty for the NFT on the first BC 210 is paid (step S1302). The information processing device 100 refers to the third BC 230, and identifies the second address on the second BC 220 corresponding to the first address (step S1303). The information processing device 100 burns the NFT on the first BC 210 as the transfer source (step S1304). The information processing device 100 generates an NFT on the second BC 220 as the transfer destination (step S1305).

The information processing device 100 generates royalty information indicating the identified second address as a payee of the royalty for the NFT on the first BC 210, and registers it on the second BC 220 (step S1306). The information processing device 100 terminates the transfer process. As a result, the information processing device 100 is enabled to appropriately transfer the NFT.

Here, the information processing device 100 may swap some steps in the processing order in each of the flowcharts of FIGs. 12 and 13 and execute the process. For example, steps S1302 and S1303 may be switched in the processing order. Furthermore, the information processing device 100 may omit the processing in some steps in each of the flowcharts of FIGs. 12 and 13.

As described above, according to the information processing device 100, it becomes possible to obtain a first request that includes the first address on the first BC 210 and the second address on the second BC 220 and requests association of the first address with the second address. According to the information processing device 100, it becomes possible to detect the first Tx including the first address and the third address on the third BC 230 issued by the first BC 210 in response to the request by the user having the first address based on the first address included in the first request. According to the information processing device 100, it becomes possible to detect the second Tx including the second address and the fourth address on the third BC 230 issued by the second BC 220 in response to the request by the user having the second address based on the second address included in the first request. According to the information processing device 100, it becomes possible to determine to associate the first address with the second address when the third address and the fourth address match based on the detected first Tx and the detected second Tx. According to the information processing device 100, it becomes possible to determine not to associate the first address with the second address when the third address and the fourth address do not match. As a result, the information processing device 100 is enabled to appropriately determine whether or not to associate the first address with the second address, and to easily ensure the validity of the correspondence relationship between the first address and the second address.

According to the information processing device 100, it becomes possible to register a result of associating the first address with the second address in the third BC 230 when the first address and the second address are determined to be associated. As a result, the information processing device 100 is enabled to leave a trail regarding the association of the first address with the second address.

According to the information processing device 100, it becomes possible to obtain a second request for requesting transfer of the token on the first BC 210 associated with the first address onto the second BC 220. According to the information processing device 100, it becomes possible to burn the token on the first BC 210 and generate the token on the second BC 220 in response to the acquisition of the second request when the first address and the second address are determined to be associated. According to the information processing device 100, it becomes possible to associate the second address with the generated token. As a result, the information processing device 100 is enabled to associate an appropriate address with the generated token.

According to the information processing device 100, it becomes possible to associate the second address with the generated token as a payee of the royalty for the token on the second BC 220. As a result, the information processing device 100 is enabled to appropriately set the payee of the royalty in the generated token.

According to the information processing device 100, it becomes possible to determine not to associate the first address with the second address when the third address and the fourth address are not valid addresses on the third BC 230. As a result, the information processing device 100 is enabled to easily ensure the validity of the association of the first address with the second address.

According to the information processing device 100, it becomes possible to determine not to associate the first address with the second address in a case where at least one of the detected first Tx or the detected second Tx has not been issued during a period from the current point in time to a point in time a predetermined time before. As a result, the information processing device 100 is enabled to easily ensure the validity of the association of the first address with the second address.

According to the information processing device 100, it becomes possible to determine not to associate the first address with the second address in a case where at least one of the first Tx or the second Tx is not detected within a certain period of time after the acquisition of the first request. As a result, the information processing device 100 is enabled to easily ensure the validity of the association of the first address with the second address.

According to the information processing device 100, it may be applied to a case where the first BC 210 is a BC different from the second BC 220. As a result, the information processing device 100 is enabled to associate the first address and the second address on BCs different from each other.

According to the information processing device 100, it becomes possible to detect the first Tx including the first address as an address representing the authenticated issuer. According to the information processing device 100, it becomes possible to detect the second Tx including the second address as an address representing the authenticated issuer. As a result, the information processing device 100 is enabled to easily ensure the validity of the first address and the second address as the target of the association.

Note that the information processing method described in the present embodiment may be implemented by a computer such as a PC or a workstation executing a program prepared in advance. The information processing program described in the present embodiment is executed by being recorded in a computer-readable recording medium and being read from the recording medium by the computer. The recording medium is a hard disk, a flexible disk, a compact disc (CD)-ROM, a magneto optical disc (MO), a digital versatile disc (DVD), or the like. Furthermore, the information processing program described in the present embodiment may be distributed via a network such as the Internet.

## Claims

1. An information processing device comprising a control unit, wherein the control unit is configured to:
obtain a request that includes a first address on a first blockchain and a second address on a second blockchain and requests association of the first address with the second address;
detect, based on the first address included in the obtained request, a first transaction that includes the first address and a third address on a third blockchain managed by the information processing device and is issued by the first blockchain in response to a request from a user who has the first address;
detect, based on the second address included in the obtained request, a second transaction that includes the second address and a fourth address on the third blockchain and is issued by the second blockchain in response to a request from the user who has the second address; and
determine to associate the first address with the second address when the third address and the fourth address match, and determine not to associate the first address with the second address when the third address and the fourth address do not match based on the detected first transaction and the detected second transaction.

2. The information processing device according to claim 1, wherein
the control unit is configured to register a result of associating the first address with the second address in the third blockchain when the first address and the second address are determined to be associated.

3. The information processing device according to claim 2, wherein the control unit is configured to:
obtain a second request that requests transfer of a token on the first blockchain associated with the first address onto the second blockchain; and
burn the token on the first blockchain, generate the token on the second blockchain, and associate the second address with the generated token in response to the acquisition of the second request when the first address and the second address are determined to be associated.

4. The information processing device according to claim 3, wherein
the first address is associated with the token as a payee of a royalty for the token on the first blockchain, and
the control unit is configured to associate the second address with the generated token as the payee of the royalty for the token on the second blockchain.

5. The information processing device according to claim 1, wherein
the control unit is configured to determine not to associate the first address with the second address when the third address and the fourth address are not valid addresses on the third blockchain.

6. The information processing device according to claim 1, wherein
the control unit is configured to determine not to associate the first address with the second address in a case where at least one of the detected first transaction or the detected second transaction has not been issued during a period from a current point in time to a point in time a predetermined time before.

7. The information processing device according to claim 1, wherein
the control unit is configured to determine not to associate the first address with the second address in a case where at least one of the first transaction or the second transaction is not detected within a certain period of time after the acquisition of the request.

8. The information processing device according to any one of claims 1 to 7, wherein the first blockchain is a blockchain different from the second blockchain.

9. The information processing device according to any one of claims 1 to 7, wherein
the first transaction includes the first address as an address that represents an authenticated issuer, and
the second transaction includes the second address as an address that represents an authenticated issuer.

10. A system comprising a first blockchain in which a first address exists, a second blockchain in which a second address exists, an information processing device, and a third blockchain managed by the information processing device, wherein
the first blockchain is configured to:
issue a first transaction that includes the first address and a third address on the third blockchain in response to a request from a user who has the first address,
the second blockchain is configured to:
issue a second transaction that includes the second address and a fourth address on the third blockchain in response to a request from the user who has the second address, and
the information processing device is configured to:
obtain a request that includes the first address and the second address and requests association of the first address with the second address;
detect the first transaction issued by the first blockchain based on the first address included in the obtained request;
detect the second transaction issued by the second blockchain based on the second address included in the obtained request; and
determine to associate the first address with the second address when the third address and the fourth address match, and determine not to associate the first address with the second address when the third address and the fourth address do not match based on the detected first transaction and the detected second transaction.

11. An information processing program causing a computer to execute a process of:
obtaining a request that includes a first address on a first blockchain and a second address on a second blockchain and requests association of the first address with the second address;
detecting, based on the first address included in the obtained request, a first transaction that includes the first address and a third address on a third blockchain managed by the information processing device and is issued by the first blockchain in response to a request from a user who has the first address;
detecting, based on the second address included in the obtained request, a second transaction that includes the second address and a fourth address on the third blockchain and is issued by the second blockchain in response to a request from the user who has the second address; and
determining to associate the first address with the second address when the third address and the fourth address match, and determine not to associate the first address with the second address when the third address and the fourth address do not match based on the detected first transaction and the detected second transaction.
